# EUROPÄISCHE PATENTANMELDUNG

(11) **EP 1 487 142 A1**
(43) Veröffentlichungstag der Anmeldung: **15.12.2004**
(21) Anmeldenummer: 03013230.2
(22) Anmeldetag: 12.06.2003
(51) Int. Cl.: H04L 1/00

(54) **Verfahren zur Einstellung der Parameter einer Datenübertragung anhand der Kanalqualität**

(71) Anmelder: SIEMENS AKTIENGESELLSCHAFT, 80333 München (DE)
(72) Erfinder: Michel, Jürgen, Dr., 81737 München (DE); Raaf, Bernhard, 81475 München (DE)

(57) **Zusammenfassung**

Zusammenfassend wird ein Verfahren zur, insbesondere drahtlosen, Datenübertragung über einen, von mehreren Terminals gemeinsam benutzten Datenübertragungskanal zwischen einem Terminal und einer Basisstation eineroffenbart, bei dem die Einstellung der Datenübertragungsparameter in Abhängigkeit vom Vorliegen eines Übergangszustandes erfolgt. Die Datenübertragungsparameter dienen hierbei dazu, die Datenübertragung an die Qualität des Datenübertragungskanals anzupassen, indem beispielsweise Sendeleistung, Codierung oder Modulation angepasst wird. Ein Übergangszustand liegt dann vor, wenn das Terminal über einen anderen als den gemeinsam benutzten Kanal zumindest eine Verbindung zu einer weiteren Basisstation hat.

## Beschreibung

Die Erfindung betrifft ein Verfahren zur Datenübertragung über einen Datenübertragungskanal in einem Kommunikationsnetz, der zwischen einem Terminal und einer oder mehreren Basisstationen über eine Funkstrecke zur Verfügung gestellt wird.

Die Leistungsfähigkeit einer Datenübertragung von einem oder mehreren Sendern zu einem Empfänger, beispielsweise in einem Mobilfunknetz von einer oder mehreren Basisstationen zu einem Terminal, hängt maßgeblich davon ab, dass zum richtigen Zeitpunkt aktuelle Informationen bezüglich der Übertragungsqualität des verwendeten Datenübertragungskanals am Sender vorhanden sind. Nur dann kann der Sender Sendeparameter für die zu sendenden Daten an die aktuelle Situation anpassen, um zufriedenstellende Übertragungsergebnisse zu erzielen. Als Sendeparameter wird beispielsweise Sendeleistung oder Modulation oder Kodierungsschema angesehen.
Die aktuelle Information bezüglich der Übertragungsqualität bzw. "Kanalqualitätsinformation" wird aus sogenannten "Kanalmessungen" oder "Kanalschätzungen" gewonnen.

Es kann weiterhin zwischen absoluter und relativer Kanalqualitätsinformation unterschieden werden, die beide zur Anpassung der Datenübertragung an die Qualität des Datenübertragungskanals, insbesondere eines Funkkanals, herangezogen werden können. Beispielsweise handelt es sich bei einer absoluten Kanalqualitätsinformation um das aktuell am Empfänger gemessene Signal zu Rauschen Verhältnis bzw. "Signal to Interference Ratio" SIR oder eine Angabe über die am Sender einzustellenden Parameter, wie zum Beispiel Modulation und Kodierung zur Erzielung einer bestimmten Blockfehlerrate am Empfänger. Die Sendeleistung kann über eine Regelung bzw. closed loop power control", d.h. einen geschlossenen Kreis, über relative Angaben angepasst werden, beispielsweise über Vergrößern bzw. Verringern der Sendeleistung bzgl. der momentan verwendeten, beispielsweise wenn von dem Terminal das von der Basisstation gesendete Signal, über welches die Daten übermittelt werden, schlecht empfangen wird.

Die Problematik wird im Folgenden an einem Beispiel aus dem UMTS Standard geschildert (UMTS: Universal Mobile Telecommunication System). Für Begriffsklärungen sei auf die Figurenbeschreibung verwiesen.

Für UMTS wurde eine paketweise Hochgeschwindigkeitsdatenübertragung für einen gemeinsam benutzten Kanal vorgeschlagen, das sogenannte HSDPA (Highspeed Downlink Packet Access). Der Empfänger ist hierbei ein Terminal, der Sender eine Basisstation. Dieser HSDPA-Standard sieht eine langsame Signalisierung von Steuerinformationen durch höhere Schichten des OSI-Schichtenmodell vor (OSI: Open System Interconnection), welche die Kanalmessungen für HSDPA steuern. Als Steuerinformationen für diese Kanalmessungen werden hauptsächlich die zeitliche Rate der Messungen, der zeitliche Offset (Verschiebung) bezüglich einer Referenz und die Anzahl der Wiederholungen bei der Übertragung eines Messwertes herangezogen.
Dies bedeutet, dass nach dem Aufbau einer Funkverbindung bzw. "Radiolink" mit fester Rate Messungen durchgeführt werden, unabhängig davon, ob und wann tatsächlich Daten auf dem für HSDPA eingerichteten gemeinsamen Abwärtsverbindungsdatenkanal HS-DSCH (Highspeed Downlink Shared Channel) geschickt werden. Daher werden einerseits unter Umständen viele unnötige Messungen durchgeführt, andererseits kann zum Zeitpunkt einer tatsächlichen Paketdatenübertragung, dem sogenannten "Packetcall" keine aktuelle Messung vorliegen. Eine Paketdatenübertragung kann hierbei aus mehreren einzelnen sogenannten Paketaufrufen bzw. "Packet calls" bestehen, die jeweils wieder aus mehreren einzelnen Datenpaketen bestehen können. Im Zusammenhang mit der Kanalqualitätsinformation wird bei den in festgelegten Zeitanständen übermittelten Kanalqualitätsinformationsnachrichten von einem periodischen CQI Feedback gesprochen.

Hierbei wird unter CQI eine absolute Kanalqualitätsinformation bzw. "Channel quality information" verstanden. Wie bereits oben ausgeführt, stellt ein CQI damit generell eine Information bzgl. Verschlechterungseffekten auf dem verwendeten Funkkanal dar.
Speziell für HSDPA wird die Kanalqualitätsinformation so definiert: Basierend auf einer unbegrenzten Beobachtungszeitdauer, berichtet das Terminal den höchstmöglichen CQI aus einer Tabelle möglicher CQI Werte. Der höchstmögliche CQI ist so bestimmt, dass bei ihm ein einzelner HS-DSCH Unterrahmen bzw. "Sub-Frame", der mit der Transport-Block Größe, der Anzahl des gemeinsamen physikalischen Hochgeschwindigkeits Abwärtsverbinduns-Datenkanals HS-PDSCH ("High Speed- Physical Downlink Shared Channel") Codes und einer Modulation, welche dem berichteten CQI bzw. einem niedrigeren CQI entspricht, formatiert ist, derart in einer 3-Zeitschlitze dauernden Referenzperiode empfangen werden kann, dass die Blockfehlerwahrscheinlichkeit 0,1 nicht überschreitet. Die 3-Zeitschlitze dauernde Referenzperiode endet hierbei einen Zeitschlitz vor dem Beginn der Übertragung des zu berichtenden CQI.

Die relative Kanalqualitätsinformation wird im Rahmen der Anmeldung als Leistungskontrollparameter bezeichnet. Für die Abwärtsverbindung bzw. den "Downlink" DL wird über eine Leistungskontrolle, welche mit Leistungskontrollparametern als Eingangsgröße arbeitet, das Signal zu Rauschen Verhältnis bzw. "signal to interference ratio" SIR auf einen Zielwert angepasst. Bei diese Leistungskontrolle spricht man auch von einer "inner loop power control", da sie auf einer niedrigen Schicht des OSI Modells erfolgt, während die Anpassung des Zielwerte über einen sogenannten "outer loop" in einer höheren Schicht unabhängig für jede Verbindung erfolgt.

Für die Lösung des oben geschilderten Problems des Vorliegens möglichst aktueller Kanalqualitätsinformation am Sender, bei möglichst geringer UL Interferenz durch CQI Nachrichten d.h. bei möglichst geringer zeitliche Rate der CQI Messungen wurden folgende Vorschläge gemacht
1. Eine sogenannte aktivitätsbasierte Kanalqualitätinformations-Rückmeldung (Activity based-CQI Feedback, CQI: Channel Quality Information). Hierbei wird die Rate der zyklischen Messungen dann erhöht, sobald am Endgerät bzw. Terminal festgestellt wird, dass Daten gesendet werden. Bei einer Paketdatenübertragung gemäß HSDPA kann insbesondere mit jeder Rückmeldung, dass ein empfangenes Paket decodiert werden konnte oder nicht eine zusätzliche Kanalinformationsnachricht CQI gesendet werden. Diese Rückmeldung kann beispielsweise ein sogenanntes "ACK"( Acknowledgement) bzw. "NAK" ("No Acknowledgement") sein. Da eine Verzögerungszeit zwischen der Feststellung von Datenaktivität am Terminal, der Durchführung und Übertragung der Messung und dem Empfang und Auswertung der Messung im Sender, also der Basisstation vorliegt, führt dies nachteilhafterweise dazu, dass für jede Paketdatenübertragung die ersten Pakete ohne aktuelle Kanalinformationsnachricht bzw. Kanalmessung übertragen werden müssen. Weiterhin werden während einer aktiven Datenübertragung durch die erhöhte Senderate für die Kanalinformationsnachricht unter Umständen unnötig viele Kanalinformationsnachrichten geschickt, wodurch unnötig Interferenz in Aufwärtsrichtung erzeugt wird. Eine weitere Möglichkeit besteht darin, nach Erhalt eines NAK eine zusätzlich Kanalinformationsnachricht zu senden. Hier treten die gleichen Nachteile wie eben beschrieben auf.
2. Als weitere Option wurde vorgeschlagen, eine Kanalinformationsnachricht gezielt anzufordern. Damit lässt sich zwar das Problem einer fehlenden aktuellen Information zu Beginn einer Datenübertragung lösen, allerdings führt die explizite Signalisierung auf dem HS-SCCH, dem Kontrollkanal für HSDPA zu einer zusätzlichen Belegung von Ressourcen im Abwärtsrichtung. Auch ist es nachteilig, dass durch den expliziten Anforderungsvorgang eine verzögerte Erstaussendung des ersten Pakets einer Paketdatenübertragung erfolgt.
3. Als weiter Option wurde vorgeschlagen, im Gegensatz zu Verfahren 1. und 2., welche die absolute Kanalqualitätsinformation verwenden, zusätzlich relative Kanalqualitätsinformation heranzuziehen. Die relative Kanalqualitätsinformation wird zur Leistungsregelung eines festzugeordneten Kanals, beispielsweise in UMTS des festzugeordneten physikalischen Kontrollkanals bzw. "dedicated physical control channel" DPCCH oder des festzugeordneten physikalischen Datenkanal DPDCH zur Anpassung der aktuellen Kanalqualitätsinformation am Sender für die HSDPA Datenübertragung verwendet.

Gemeinsamer Nachteil dieser Methoden ist, dass sie nicht in allen Fällen eine zufriedenstellende Lösung beispielsweise hinsichtlich der Aktualität oder der durch zusätzliche Kanalqualitätsnachrichten erhöhten UL Interferenz anbieten.

Ausgehend von diesem Stand der Technik ist es daher Aufgabe der vorliegenden Erfindung, ein Verfahren zur Datenübertragung anzugeben, bei dem einerseits die Anzahl der Übertragungen zur Ermittlung der Kanalqualität eines Funkkanals minimiert ist und andererseits eine für die momentan zu tätigende Übertragung aussagekräftige Kanalqualitätsinformation in einer großen Anzahl von Übertragungsfällen vorliegt. Weiterhin ist es Aufgabe der Erfindung auch ein entsprechendes Terminal, eine Basisstation und ein Kommunikationsnetz anzugeben.

Diese Aufgabe wird durch die unabhängigen Ansprüche 1, 19,20 und 21 gelöst. Vorteilhafte Weiterbildungen sind Gegenstand der abhängigen Ansprüche.

Die Erfinder haben die eingangs beschriebenen Verfahren in Bezug auf ihre Verwendung bei Übergabezuständen, insbesondere beim sogenannten "Softhandover" untersucht. Im Prinzip ist es nämlich möglich, zusätzliche Informationen über den Zustand des Funkkanals aus der Leistungsregelung für die Sendeleistung fest zugeordneten Kanal, beispielsweise für den Fall eines UMTS Systems des DPCCH oder/und DPDCH, zu entnehmen.

Allerdings ist dies für den Fall, dass sich das Terminal im sogenannten weichen Übergabemodus bzw. "Softhandover" befindet, nicht vorteilhaft, da sich die Leistungsregelung auf den festzugeordneten Kanal, beispielsweise in UMTS den DPCCH o-der/und den DPDCH, der sich im "Softhandover" befindet bezieht wogegen der gemeinsame Kanal, z.B. die zu HSDPA gehörenden Kanäle, nicht in einem "Softhandover" Modus ist, weil wie eingangs dargelegt ein derartiger Übergabezustand nicht für einen gemeinsamen Kanal, beispielsweise den HS-DSCH oder den HS-DCCH, vorgesehen ist.

Unter "Softhandover" wird ein Zustand verstanden, bei dem ein Terminal mit mehreren Basisstationen verbunden ist. Dabei wird die Leistung so geregelt, dass die Mobilstation bzw. das Terminal die gesendeten Daten unter Zuhilfenahme der empfangenen Signale aller Basisstationen korrekt empfangen kann. In diesem Zusammenhang wird auch von einem "Maximum Ratio Combining" gesprochen.

Da die Daten auf dem gemeinsamen Kanal, beispielsweise die HSDPA Datenpakete, nur von dieser einen, primären Basisstation zu der Mobilstation gesendet werden, liefert die Leistungsregelung die für einen Satz von Basisstationen, also die primäre zumindest eine weitere sekundäre optimiert ist keine zusätzliche Informationen, welche aussagekräftig bezüglich einer Anpassung der Datenübertragung allein auf dem gemeinsam benutzten Kanal ist.

Andererseits würde dieses Miteinbeziehen der aus der Leistungsregelung gewonnenen Daten im Falle von nicht "Softhandover" die Aussagekraft der Kanalqualitätsinformation bedeutend verbessern.

Es ist daher Kern der Erfindung, dass bei einer Datenübertragung zwischen einem Terminal und einer Basisstation über einen gemeinsamen Kanal zunächst im Terminal festgestellt wird, ob sich das Terminal in einem Übergabezustand, insbesondere einem Softhandover-Zustand befindet. In Abhängigkeit vom Vorliegen dieses Übergabezustandes erfolgt die Einstellung von Datenübertragungsparametern in der Basisstation, welche eine Übertragung auf einem gemeinsamen Kanal zwischen einem Terminal und einer primären Basisstation regeln.

Das Vorliegen eines Übergangszustandes wird dem Terminal und der Basisstation beispielsweise über eine Steuerinformation von einer zentralen Einheit eines Kommunikationsnetzes, insbesondere einem Radionetzwerkkontroller, mitgeteilt. Diese Mitteilung kann insbesondere darin bestehen, dass dem Terminal mitgeteilt wird, dass es über ihm fest zugeordnete Kanäle eine Verbindung zu zumindest einer weiteren sekundären Basisstation aufbaut.

In Abhängigkeit davon, ob sich das Terminal in einem Übergabezustand befindet oder nicht, erfolgt die Einstellung von Datenübertragungsparametern nun anhand unterschiedlich zusammengesetzter Kanalqualitätsinformationen.

Im Falle, dass sich das Terminal im Übergabezustand befindet, wird eine absolute Kanalqualitätsinformation, also beispielsweise das Modulations- und Kodierungsschema dafür herangezogen. Dadurch wird vermieden, dass relative Kanalqualitätsinformation, also insbesondere Leistungsregelungsparameter zur Einstellung verwendet werden, die in diesem Falle, da die Leistungsparameter sich summarisch auf alle festzugeordneten Kanäle zu zumindest einer primären und einer sekundären Basisstation beziehen, nicht aussagekräftig für den Zustand des gemeinsam benutzten Kanals sind.

Diese absolute Kanalqualitätsinformation kann, wie eingangs aufgeführt, in wiederkehrenden Abständen, die insbesondere festgelegt sind, in Abständen, deren Länge von der Aktivität der Datenübertragung abhängt, ermittelt und übertragen werden oder eine Ermittlung und Übertragung erfolgt, wenn dies von der Basisstation angefordert wird.
Situationsabhängig können auch Kombinationen dieser Methoden angewandt werden.

In einer Ausgestaltung ist es vorgesehen, dass beim Vorliegen eines Übergabezustandes weiterhin überprüft wird, ob die Verbindung zur primären Basisstation die stärkste ist. Hierzu kann die vom Terminal empfangene Leistung eines Signals über die dem Terminal festzugeordneten Kanäle verglichen werden. Das Signal ist hierbei eine physikalische Größe, beispielsweise eine Feldstärke, welches in Abhängigkeit von den zu übertragenden Funktionen geändert wird und so den Informationsgehalt der zu übertragenden Daten beinhaltet.

Ist die Verbindung zur primären Basisstation die stärkste, dann wird die gemeinsame Leistungsregelung bzw. die Leistungsregelung für den Summenkanal, für alle festzugeordneten Kanäle weitgehend durch die Verbindung zur primären Basisstation bestimmt. Damit ist die relative Kanalqualitätsinformation, beispielsweise die Leistungsregelungsparameter, in Bezug auf den Zustand des gemeinsamen Datenübertragungskanals, welcher auch zur primären Basisstation verläuft, aussagekräftig.

Dann kann es insbesondere vorteilhaft sein, Lang und Kurzzeit-Information über die Änderungen des gemeinsamen Kanals aus auch gemittelter absoluter Kanalqualitätsinformation und relativer Kanalqualitätsinformation zu gewinnen.

Im Falle, dass sich das Terminal nicht in einem Übergabezustand befindet, wird ohne eine weitere Fallunterscheidung zusätzlich zu einer absoluten Kanalqualitätsinformation auch noch relative Kanalqualitätsinformation herangezogen. Dabei wird insbesondere die absolute Kanalqualitätsinformation zumindest teilweise gemittelt, so dass ein Langzeitwert über die Kanalqualität erhalten wird, während die Information bzgl. kurzfristiger Änderungen der Kanalqualitätsinformation aus der relativen Kanalqualitätsinformation beispielsweise aus den Kommandos der Leistungsregelung des festzugeordneten Kanals gewonnen wird.

Dies hat, wie in Zusammenhang mit den obigen Ausführungen zu ersehen ist, den Vorteil, dass eine Anpassung der Datenübertragungsparameter an die aktuelle Kanalqualität, insbesondere des gemeinsam benutzten Kanals, auch im Falle eines Übergabezustandes, insbesondere eines "Softhandovers", erfolgen kann, ohne dass das Terminal gleichzeitig im Falle eines Nicht-Übergabe Zustandes auf weniger vorteilhafte Methoden zurückgreifen müsste.

Insbesondere ist ein gemeinsam benutzter Kanal diskontinuierlich und es erfolgt keine Anpassung der Sendeleistung für eine Datenübertragung über diesen Kanal. Vielmehr kann eine Anpassung der Datenübertragungsparameter auf diesem Kanal über beispielsweise ein Modulations- und Kodierungsschema erfolgen.

Dieses Verfahren eignet daher insbesondere für eine Paketdatenübertragung, z.B. in UMTS das HSDPA Verfahren, auch da hierbei die Pakete zumeist zu solchen Zeitpunkten übertragen werden, an denen die Kanalqualität gut ist, im Gegensatz zu Sprache, bei der zu hohe Verzögerungszeiten nicht akzeptiert werden können. Somit kann durch die Kenntnis, wann ein Kanalzustand gut ist, hier die Übertragungseffizienz besonders gesteigert werden.

Die Erfindung wird im Folgenden anhand von Beispielen erklärt, welche teilweise auch in den Figuren dargestellt sind:
Figur 1 zeigt die schematische Beziehung zwischen Sender, Empfänger und Netzwerk;
Figur 2 zeigt ein Ablaufdiagramm einer möglichen Ausgestaltung des vorgeschlagenen Verfahrens.

Vor einer detaillierten Darstellung der Figuren sollen zunächst verwendete Begriffe geklärt werden:

Bei einem Kommunikationssystem oder Kommunikationsnetzwerk handelt es sich um eine Struktur zum Austausch von Daten. Es kann sich hierbei beispielsweise um ein zellulares Mobilfunknetzwerk handeln, wie etwa das GSM-Netzwerk (Global System of Mobile Communications) oder das UMTS-Netzwerk (Universal Mobile Telecommunications System). Ein Kommunikationsnetz umfasst zumindest zwei Verbindungsknoten, es fallen also auch sogenannte "Punkt zu Punkt" Verbindungen unter diesen Begriff.

In einem Kommunikationssystem sind allgemein Terminals und Basisstationen vorgesehen, die über eine Funkschnittstelle miteinander in Verbindung treten. Im UMTS weist das Kommunikationssystem oder Funkübertragungsnetzwerk zumindest Basisstationen, hier auch NodeB genannt, sowie Radio Netzwerk Steuerungseinheiten bzw. Radio Network Controller (RNC) zum Verbinden der einzelnen Basisstationen auf. Das terrestrische Radio Zugriffsnetz bzw. "Universal Terrestrial Radio Access Network" UTRAN ist der funktechnische Teil eines UMTS-Netzes, in dem beispielsweise auch die Funkschnittstelle zur Verfügung gestellt wird. Eine Funkschnittstelle ist stets genormt und definiert die Gesamtheit der physikalischen und protokollarischen Festlegungen für den Datenaustausch, beispielsweise das Modulationsverfahren, die Bandbreite, den Frequenzhub, Zugangsverfahren, Sicherungsprozeduren oder auch Vermittlungstechniken. Das UTRAN umfasst also zumindest Basisstationen sowie zumindest einen RNC.
Eine Basisstation ist eine zentrale Einheit in einem Kommunikationsnetzwerk, die im Falle eines zellulären Mobilfunknetzwerks Terminals oder Kommunikationsendgeräte innerhalb einer Zelle des Mobilfunknetzwerks über einen oder mehrere Funkkanäle bedient. Die Basisstation stellt die Luftschnittstelle zwischen Basisstation und Terminal bereit. Sie übernimmt die Abwicklung des Funkbetriebs mit den mobilen Teilnehmern und überwacht die physikalische Funkverbindung. Darüber hinaus überträgt sie die Nutz- und Statusnachrichten an die Terminals. Die Basisstation hat keine Vermittlungsfunktion, sondern lediglich eine Versorgungsfunktion. Eine Basisstation umfasst zumindest eine Sende/Empfangseinheit.

Ein Terminal kann ein beliebiges Kommunikationsendgerät sein, über das ein Benutzer in einem Kommunikationssystem kommuniziert. Es fallen beispielsweise Mobilfunkendgeräte wie Mobiltelefone oder tragbare Computer mit einem Funkmodul darunter. Ein Terminal wird oft auch als "Mobilstation" (MS) oder in UMTS "User Equipment" (UE) bezeichnet.

Im Mobilfunk wird zwischen zwei Verbindungsrichtungen unterschieden. Die Abwärtsverbindung bzw. "Downlink" (DL) bezeichnet die Übertragungsrichtung von der Basisstation zum Terminal. Die Aufwärtsverbindung bzw. "Uplink" (UL) bezeichnet die entgegengesetzte Übertragungsrichtung vom Terminal zur Basisstation.

In Breitbandübertragungssystemen, wie beispielsweise einem UMTS-Mobilfunknetz ist ein Kanal ein Teilbereich einer zur Verfügung stehenden Gesamtübertragungskapazität. Als Funkkanal wird im Rahmen dieser Anmeldung ein drahtloser Kommunikationsweg bezeichnet.

In einem Mobilfunksystem, beispielsweise UMTS, gibt es für die Übertragung von Daten zwei Arten von physikalischen Kanälen: festzugeordnete Kanäle bzw. "Dedicated Channels" und gemeinsam benutzte bzw. "Common Channels". Bei den Dedicated Channels wird eine physikalische Ressource nur für die Übertragung von Informationen für ein bestimmtes Terminal reserviert. Bei den Common Channels können Informationen übertragen werden, die für alle Terminals gedacht sind, beispielsweise der primäre gemeinsame physikalische Steuerungskanal bzw. "Primary Common Control Physical Channel" (P-CCPCH) im Downlink, oder aber alle Terminals teilen sich eine physikalische Ressource. Dies ist der Fall beim HS-PDSCH, über den an ein Terminal in Abhängigkeit von der Verbindungsqualität zu dem Terminal Daten gesendet werden.

In Mobilfunksystemen wie beispielsweise UMTS sind neben leitungsvermittelten bzw. "circuit switched" Diensten, bei denen eine Verbindung während ihrer Zeitdauer fest allokiert ist, auch paketorientierte bzw. "packet switched" Dienste vorgesehen. Leitungsvermittelte Dienste können auch diskontinuierlich durchgeführt werden.

Für die zeitliche Koordination einer Datenübertragung oder von Signalisierungsprozeduren sind sogenannten Zeitschlitze bzw. "time slots" bzw. "slots" vorgesehen. Ein Zeitschlitz weist im UMTS System eine Zeitdauer von 0,666 ms auf.

Bei einer paketorientierten Datenübertragung ist die Transportblockgröße die Anzahl der Informationsbits die in einem Block von Schicht 2 eines OSI Modells an die Schicht 1 eines OSI Modells zur Codierung und Übertragung übergeben werden. Die Blockfehlerwahrscheinlichkeit ist das Verhältnis der Anzahl der Transportblöcke mit mindestens einem fehlerhaft übertragenen Bit zur gesamten Anzahl der betrachteten Transportblöcke. Unter einem Transportblock wird hierbei eine Gruppe von Informationsbits verstanden.

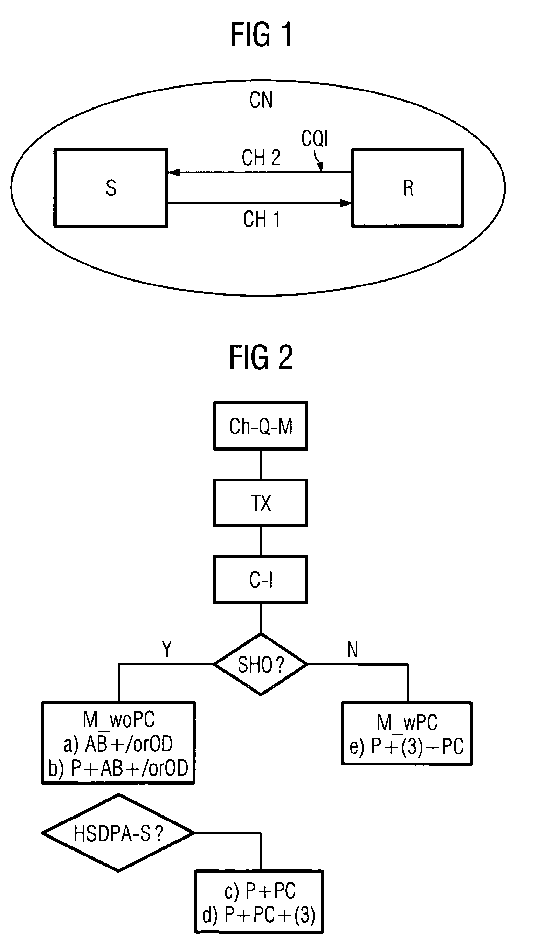

In Figur 1 ist ein Sender S und ein Empfänger R in einem Kommunikationssystem CN zu sehen. Der Sender S sendet Daten zum Empfänger R über eine erste Kanalverbindung CH1. Der Empfänger R kann zum Sender S Daten über eine zweite Kanalverbindung CH2 senden.

Der Sender S kann beispielsweise eine Basisstation sein, der Empfänger R ein Terminal. Bei dem Kommunikationsnetzsystem kann es sich beispielsweise um ein System gemäß dem UMTS, dem GSM oder anderen Standards handeln. Die erste Kanalverbindung CH1 kann mehrere Kanäle umfassen, beispielsweise einen Datenübertragungskanal zur Übertragung von Nutzdaten bzw. "load bits" sowie einen Kontrollkanal zur Übertragung von Kontrollinformation. Die zweite Kanalverbindung CH2 kann nur einen Kontrollkanal umfassen oder auch wie die erste Kanalverbindung CH1 aus einem Kontrollkanal und einem Datenübertragungskanal bestehen.

Für eine Übertragung von Nutzdaten über den Datenübertragungskanal der ersten Kanalverbindung CH1 vom Sender zum Empfänger ist es wichtig, dass die Kanalqualität dieses Datenübertragungskanals bekannt ist. Dazu ermittelt der Empfänger, also beispielsweise das Terminal, aus Daten der ersten Kanalverbindung eine absolute Kanalqualitätsinformation bzw. "channel quality information" CQI.

Der Empfänger R kann diese Kanalqualitätsinformation auch aus Daten von allgemeinen Kontrollkanälen ermitteln. Im Falle von HSDPA würde es sich hierbei beispielsweise um den allgemeinen Pilotkanal CPICH (Common Pilot Channel) handeln.

Diese Kanalqualitätsinformation oder "Channel Quality Information" CQI wird vom Empfänger R an den Sender S übermittelt, beispielsweise über den Kontrollkanal der zweiten Kanalverbindung CH2.

Nun ist es für die Datenübertragung über die erste Kanalverbindung wichtig, dass eine möglichst zeitnahe Kanalqualitätsinformation CQI beim Sender S vorliegt. Gleichzeitig soll nicht unnötig Kanalqualitätsinformation CQI verschickt werden, da dies, wie bereits gesagt, zu Interferenzen führt.

Um eine Vielzahl von möglichen Übertragungsszenarios zu erfassen wird deshalb im Rahmen der Erfindung ein Einstellen von Datenübertragungsparametern, basierend auf denen eine Datenübertragung an den Zustand eines Datenübertragungskanals angepasst wird, in Abhängigkeit vom Vorliegen eines Übergabezustandes, insbesondere eines Soft-Handovers vorgeschlagen.

Bevor das Ablaufdiagramm in Figur 2 erläutert wird, sollen zunächst die teilweise bereits eingangs erwähnten Verfahren noch detailliert geschildert werden:
1)Variable Kanalqualitätsnachrichtenübermittlung bzw. "Variable Rate CQI Reporting"
2)Nachfragegesteuerte Kanalqualitätsnachrichtenübermittlung bzw. "On-Demand CQI Reporting"
3)Zeitdauerbasierte Kanalqualitätsnachrichtenübermittlung bzw. "Duration of CQI measurement"

1) Bei "Variable Rate CQI Reporting" reduziert man die durch CQI Reports im Mittel erzeugte Interferenz indem man ihre Häufigkeit der CQI Nachrichten im Falle dass keine HSDPA Datenaktivität vorliegt reduziert und im Falle von Aktivität erhöht. Damit stellt man auch sicher, dass gerade dann wenn CQI Nachrichten von der Basisstation benötigt werden - nämlich im Falle der Datenaktivität - diese auch entsprechend häufig übertragen werden.
   Bei "Variable Rate CQI Reporting" unterscheidet man weiter zwischen "Activity Based CQI Feedback" und "NAK Based CQI Feedback". "Activity Based CQI Feedback" überträgt mit jedem ACK und NAK ein CQI Wert wogegen "NAK Based CQI Feedback" nur mit jedem NACK einen CQI Wert überträgt.
2) Das "On-Demand CQI Feedback" Verfahren nutzt die physikalischen Ressourcen effizienter als der derzeitige Standard indem CQI Werte durch die Basisstation - wenn benötigt - durch eine schnelle Schicht 1 Signalisierung angefordert werden. Direkt auf Schicht 1 bzw. der physikalischen Schicht übertragene Informationen sind mit weniger Verzögerung verfügbar. Damit liegen aktuelle CQI's schon frühzeitig - zu Beginn der Aktivität auf dem HS-DSCH - vor. Die Basisstation hat die Kontrolle über den Grad und den Zeitpunkt der "On-Demand" CQI Nutzung.
3) Die nun von der Erfindung miterfasste zeitdauerbasierte Kanalqualitätsnachrichtenübermittlung bzw. als "Duration of CQI measurement" bezeichnetes Verfahren umfasst die Erweiterung der derzeitigen HSDPA Spezifikation hinsichtlich mindestens eines folgender neuen Aspekte:
   a) Einführung der Möglichkeit aufeinenderfolgende CQI Werte wie sie in Release 5 definiert sind in der Mobilstation zu mitteln und nicht die ungemittelten aufeinanderfolgenden Werte sondern die gemittelten Werte an die Basisstation zu übertragen. Die Mittelung kann linear oder beispielsweise auch logarithmisch erfolgen
   b) Verwendung eines anderen Zeitintervalls für die CQI Messung an der Mobilstation als die derzeit spezifizierten 3 HSDPA Zeitschlitze.

Dieses Verfahren (3) kann auch als Ergänzung zu bereits existierenden Verfahren zur Verbesserung der CQI Information durch "power control tracking " (PCT) gesehen werden. Dabei wird die Information über den aktuellen Kanalzustand an der Basisstation durch die Aufwärtsverbindungs- "power control" (PC) Kommandos des Terminals auf Grund der Veränderungen des Abwärtsverbindungs- Kanals nachgeführt bzw. aktualisiert.

Die PC Kommandos werden von Terminal basierend auf dem festzugeordneten Kanal, bei UMTS z.B dem fest zugeordneten, physikalischen Abwärtsverbindungskontrollkanal DL-DPCCH oder dem entsprechenden Datenkanal DL-DPDCH ermittelt. Es wird ein PC Kommando pro Zeitschlitz bzw. "Slot" , d.h. in einem UMTS System alle 0,666 ms, übertragen. CQI Werte werden höchstens alle 1,88 ms für ein UMTS System, bzw. alle 3 "Slots" übertragen und in der Praxis wird man ehr größere Werte für die Periodendauer einer wiederkehrenden CQI Übertragung wählen Z.B. wird k=40 gewählt, d.h. es wird ein CQI Wert alle 80 ms in einem UMTS System bzw. 120 "Slots" übertragen, um die durch die CQI Übertragung entstehende Aufwärtsverbindungs-Interferenz zu reduzieren.

Durch die Einführung der Mittelung aufeinanderfolgender CQI Werte in der Mobilstation wird die Schätzung des langsamen Fadings bei gleichzeitiger Reduktion der CQI Übertragungshäufigkeit verbessert. Die Information über schnelle Veränderungen des Kanals werden über PCT ausgewertet und an der Basisstation bei der Auswahl des entsprechenden HSDPA MCS berücksichtigt.

Jeweils für sich genommen sind diese Verfahren nur in ganz bestimmten Fallen vorteilhaft, wogegen sie in anderen Fällen nachteilig sind.

So kann zum Beispiel im Softhandover bzw. "SHO" PCT nicht verwenden werden, da sich die Berechnung des Aufwärtsverbindungsleistungskontrollkommandos bzw. des UL PC Kommandos im SHO auf die geschätzte SIR bezüglich aller DPCCH/DPDCH Signale der im aktiven Set enthaltenen Verbindungen bezieht und die HSDPA Verbindung entsprechend dem Standard nicht im SHO ist. Daher sind die PC Kommandos nicht oder nur bedingt auf die HSDPA Verbindung anwendbar, nämlich dann, wenn die HSDPA Verbindung auch die stärkste DPCCH/DPDCH Verbindung im aktiven Set bzw. in der aktiven Gruppe von Verbindungen ist ist. Das Verfahren (3) ist damit im SHO Fall nur für relativ schnelle und sehr langsame, das heißt quasi statisch, Geschwindigkeiten vorteilhaft anwendbar, da im Bereich großer Geschwindigkeiten auf Grund der Verzögerung zwischen "on demand" CQI Anforderung und dem Erhalt des CQI Wertes der Mittelwert aus CQI Werten meist genauer ist als der nichtgemittelte on-demand CQI Wert und im Bereich sehr kleiner Geschwindigkeiten die Mittelung gegenüber keiner Mittelung vorteilhaft ist.

HSDPA wurde allerdings mit dem Hauptaugenmerk auf langsame und mittlere, d.h etwa 3- 30km/h, d.h. beispielsweise Fußgänger oder Radfahrgeschwindigkeiten Geschwindigkeiten hin optimiert. Genau in diesem Bereich sind im SHO Fall die Methoden (1) und (2) vorteilhafter als (3)

Da nun Mobilstation und Basisstation jeweils die Information haben, ob sie sich im SHO befinden oder nicht, und die Verfahren (1),(2) sowie Kombinationen dieser Verfahren im SHO vorteilhaft sind, wogegen sie im nicht SHO gegenüber (3) und PCT keinen Gewinn bringen und (3) mit PCT im nicht SHO Fall günstig ist, wogegen PCT im SHO Fall nicht oder nur bedingt anwendbar ist, ist der Kern der Erfindung Verfahren (1),(2) oder Kombinationen davon im allgemeinen SHO Fall anzuwenden und (3) oder Kombinationen davon im nicht SHO Fall einzusetzen. Unter allgemeiner SHO wird hierbei verstanden, dass nicht die Verbindung zu einer Basisstation dominiert.

Alle Verfahren können auch zusammen mit dem derzeit schon spezifizierten periodischen CQI Verfahren kombiniert werden.

Die aufgeführten Verfahren werden gemäss einer Ausgestaltung der Erfindung ohne zusätzliche Signalisierung jeweils in dem für sie günstigen Betriebsfall eingesetzt. Kriterium, wann welches Verfahren verwendet wird ist das Vorliegen eines Übergabezustandes wie dem SHO. Dadurch entfällt die Signalisierung, wann welches Verfahren zu verwenden ist. Sowohl Terminal als auch Basisstation haben die Information, ob sie sich im SHO befinden oder nicht.

In Figur 2 ist nun ein Ablaufdiagramm für eine Ausgestaltung des vorgeschlagenen Verfahrens zu sehen, aus der die Auswahl der verschiedenen Methoden ersichtlich wird: Zunächst werden im Schritt Ch-Q-M Messergebnisse bezüglich der Kanalqualität, welche vom Terminal alleine oder zusammen mit einer oder mehreren Basisstationen durchgeführt wurden, ermittelt.

In einem zweiten Schritt TX werden diese an eine zentrale Einheit übermittelt. Die zentrale Einheit kann eine Basistation oder auch ein Radio Network Controller sein. Von einer weiteren oder derselben zentralen Einheit erhält das Terminal im Schritt C-I auch die Information, ob es sich in einem Übergabemodus befindet.

Bei dem Übergabemodus handelt es sich beispielsweise wie in Fig. 2 gezeigt, um einen Soft-Handover SHO. Es kann sich jedoch auch um einen Softer-Handover handeln, bei dem ein Übergang zwischen einzelnen Sektoren bzw. einzelnen Antennensektoren einer Basistation in der Zelle stattfindet oder allgemein um einen Zustand, bei dem ein Terminal eine Verbindung zu mehreren Basisstationen oder Untereinheiten von Basisstationen hat.

Nun werden in Abhängigkeit vom Vorliegen eines Übergabemodus (Schritt SHO) unterschiedliche Methoden zur Anpassung der Datenübertragung an die Bedingungen des Datenübertragungskanals angewandt.

Im Falle, dass ein Übergabezustand, insbesondere ein SHO vorliegt, sind folgende Ausgestaltungen vorgesehen:
a) Befinden sich Terminal und Basisstation im SHO, so wird Verfahren (1) oder (2) bzw. eine Kombination von (1) und (2) Verfahren verwendet. Wie bereits eingangs dargelegt, weisen eine aktivitätsbasiertes CQI-Übertragung oder eine nachfragegesteuerte CQI-Übertragung den Vorteil einer höheren Aktualität der CQI-Nachricht auf. Das Hinzuziehen eines oder mehrerer Leistungssteuerungsparameter hingegen wäre in diesem Falle nachteilig, da im SHO eine Leistungsregelung bezüglich des "Summenkanal", welcher sich aus einer Addition aller aktiven , fest zugeordneten Kanäle bzw. "dedicated channels" zwischen dem Terminal und zumindest 2 Basisstation ergibt, erfolgt. Die Leistungsregelung für den Summenkanal ist für den individuellen Zustand eines Einzelkanals im Allgemeinen nicht aussagekräftig. Daher werden nur CQI-basierte Methoden in diesem Fall verwendet.
b) Befinden sich Terminal und Basisstation im SHO, so wird Verfahren (1) oder (2) bzw. eine Kombination von (1) und (2) zusätzlich zu einem Verfahren angewendet, bei dem die CQI's periodisch geschickt werden. Dies hat neben dem unter a) genannten Vorteil, dass die Information über die Kanalqualität unabhängig periodisch erneuert wird und zudem der Implementierungsaufwand aufgrund des bereits angewandten, periodischen bzw. zyklischen Verfahrens gering ist.
c) Befinden sich Terminal und Basisstation im SHO und die HSDPA Verbindung ist die stärkste (beste Verbindung) der aktiven SHO Verbindungen bzw. im aktiven SHO Set, so wird zusätzlich zu einem zyklischen oder periodischen CQI-Übermittlung bzw. "Reporting" ein Leistungskontrolle Verfahren PCT verwendet. Dies hat folgenden Hintergrund: Eine HSDPA Verbindung besteht im Gegensatz zu einer Verbindung über die festzugeordneten Kanäle stets nur mit einer Basisstation. Ist nun die HSDPA Verbindung die stärkste Verbindung, so ist dies äquivalent mit der Aussage, dass die Eigenschaften des Summenkanals aller aktiven festzugeordneten Kanäle bzw. dedicated Channels durch die Eigenschaften des Dedicated Channels zu dieser Basisstation mit guter Näherung bestimmt werden. Daher besitzen der oder die Leistungsregelungsparameter des oder der Dedicated Channels bezüglich der Funkverbinung zu der HSDPA-übetragenden Basisstation eine Aussagekraft, weshalb es vorteilhaft ist, sie zur Bestimmung der Kanalqualität mit heranzuziehen.
d) Befinden sich Terminal und Basisstation im SHO und die HSDPA Verbindung ist die stärkste (beste Verbindung) im aktiven SHO Set, so wird eine zyklische oder periodische CQI-Übertragung unter Einbeziehung von Leistungsregelungsparametern PCT wie unter c) beschrieben in Kombination mit Verfahren (3) verwendet. Dies hat zusätzlich zu den unter c) genannten Vorteilen folgenden Vorteil:
   Durch eine Mittelung der CQI-Werte, also der absoluten Kanalqualitätsinformation, wird bezüglich langfristiger Änderungen ein zuverlässigerer absoluter Kanalinformations-Wert ermittelt. Zusätzlich werden kurzfristige Änderungen über den oder die Leistungsregelungsparameter erfasst. Somit ergibt sich eine sehr detaillierte Beschreibung des Funkkanals

Im Falle, dass das Terminal sich nicht in einem Übergabezustand befindet, ist folgendes vorgesehen.
e) Befindet sich Mobil- und Basisstation im nicht SHO Fall, so wird eine periodische oder zyklische CQI_Messung in Kombination mit Verfahren (3) unter Einbeziehung von einem oder mehrerer Leistungsregelungsparamter verwendet. Dies hat neben einem geringen Implementierungsaufwand den Vorteil einer detaillierten Beschreibung des Funkkanals mit langfristigen und kurzfristigen Entwicklungen.

Zusammenfassend wird ein Verfahren zur, insbesondere drahtlosen, Datenübertragung über einen, von mehreren Terminals gemeinsam benutzten Datenübertragungskanal zwischen einem Terminal und einer Basisstation offenbart, bei dem die Einstellung der Datenübertragungsparameter in Abhängigkeit vom Vorliegen eines Übergangszustandes erfolgt. Die Datenübertragungsparameter dienen hierbei dazu, die Datenübertragung an die Qualität des Datenübertragungskanals anzupassen, indem beispielsweise Sendeleistung, Codierung oder Modulation angepasst wird. Ein Übergangszustand liegt dann vor, wenn das Terminal über einen anderen als den gemeinsam benutzten Kanal zumindest eine Verbindung zu einer weiteren Basisstation hat.

## Patentansprüche

1. Verfahren zur Datenübertragung in einem Kommunikationsnetz (CN), bei dem
- mindestens eine erste Datenübertragung zwischen einem Terminal (E) und einer primären Basisstation (S) über zumindest einen fest zugeordneten Kanal, dessen zumindest einer Übertragungsparameter mittels relativer Kanalqualitätsinformation in einem geschlossenen Kreis geregelt wird und
- mindestens eine zweite Datenübertragung zwischen einem Terminal (E) und der primären Basisstation (S) über zumindest einen gemeinsamen Kanal erfolgt und die zweite Datenübertragung mittels Übertragungsparametern für die zweite Datenübertragung an den Kanal angepasst wird und
- die Einstellung der Übertragungsparametern für den gemeinsamen Kanal in folgenden Schritten erfolgt:
a) Senden einer Steuerinformation von einer zentralen Steuereinheit des Kommunikationsnetzes an das Terminal (E), welche angibt, ob über einen festzugeordneten Kanal eine Verbindung vom Terminal (E) zu zumindest einer weiteren sekundären Basisstation (S) aufgebaut werden soll;
b) Übermitteln von absoluter Kanalqualitätsinformation (CQI) zwischen dem Terminal (E) und der primären Basisstation (S);
c) Einstellen der Datenübertragungsparameter für den gemeinsamen Kanal an der primären Basisstation (S) anhand absoluter Kanalqualitätsinformation, wenn anhand der Steuerinformation eine Verbindung zu der zumindest einen weiteren sekundären Basisstation festgestellt wird.

2. Verfahren nach Anspruch 1, bei dem in Schritt b) die absolute Kanalqualitätsinformation (CQI) in Zeitabständen, welche von der Aktivität der Datenverbindung abhängen, zwischen Terminal und primärer Basisstation übermittelt werden.

3. Verfahren nach Anspruch 1 oder 2, bei dem in Schritt b die absolute Kanalqualitätsinformation (CQI) von der primären Basisstation (S) angefordert wird.

4. Verfahren nach Anspruch 1 bis 3, bei dem die absolute Kanalqualitätsinformation (CQI) in wiederkehrenden, insbesondere zyklisch wiederkehrenden, Zeitabständen vom Terminal (E) an die Basisstation (S) übermittelt wird.

5. Verfahren nach Anspruch 1 oder 4, insbesondere rückbezogen auf 1, bei dem ermittelt wird, ob die Verbindung zu der primären Basisstation (S) in Bezug auf eine vom Terminal (E) empfangene Leistung die stärkste ist und falls diese Verbindung die stärkste ist, die Einstellung der Datenübertragungsparameter für den gemeinsamen Kanal auch anhand relativer Kanalqualitätsinformation erfolgt.

6. Verfahren nach Anspruch 5, bei dem die Einstellung der Datenübertagungsparameter auch anhand gemittelter absoluter Kanalqualitätsinformation erfolgt.

7. Verfahren nach Anspruch 6, bei dem die gemittelte absolute Kanalqualitätsinformation in von der Mittelung erfassten Zeitabständen zwischen Terminal (E) und Basisstation (S) übertragen werden.

8. Verfahren nach Anspruch 1, bei dem in Schritt c), wenn keine Verbindung zu einer weiteren sekundären Basisstation vorliegt, die Einstellung der Datenübertragungsparameter für den gemeinsamen Kanal über absolute und relative Kanalqualitätsinformation erfolgt.

9. Verfahren nach Anspruch 8, bei dem die absolute Kanalqualitätsinformation (CQI) in wiederkehrenden, insbesondere zyklisch wiederkehrenden, Abständen zwischen Terminal (E) und primärer Basisstation (S) übermittelt wird.

10. Verfahren nach Anspruch 8 oder 9, bei dem die absolute Kanalqualitätsinformation (CQI) gemittelt wird und in den von der Mittelung erfassten Zeitabständen vom Terminal (E) an die primäre Basisstation (S)übertragen wird.

11. Verfahren nach einem der Ansprüche 3 bis 7, bei dem die absolute Kanalqualitätsinformation (CQI) von der primären Basisstation (S) über eine Signalisierung in der physikalischen Schicht angefordert wird.

12. Verfahren nach einem der Ansprüche 2 bis 7, bei dem die Abhängigkeit der Zeitabstände, in denen die absolute Kanalqualitätsinformation (CQI) übermittelt wird, von der Aktivität der Datenübertragung derart gestaltet ist, dass bei jeder Bestätigung eines nicht korrekten Empfangs eines Teils der Daten über den gemeinsamen Kanal, welche vom Terminal (E) an die primäre Basisstation übermittelt wird, absolute Kanalinformation (CQI) vom Terminal (E) zur Basisstation übertragen wird.

13. Verfahren nach einem der vorhergehenden Ansprüche, bei dem die Datenübertragung auf dem gemeinsam genutzten Kanal paketweise erfolgt.

14. Verfahren nach einem der vorhergehenden Ansprüche, bei dem die absolute Kanalqualitätsinformation (CQI) aussagt, welche Modulation oder/und welche Codierung auf dem gemeinsam genutzten Datenübertragungskanal gewählt wird, um eine festgelegte Bitfehlerrate zu erzielen.

15. Verfahren nach einem der vorhergehenden Ansprüche, bei dem die relative Kanalqualitätsinformation aussagt, ob die Sendeleistung in Bezug auf die momentan vom Terminal im Rahmen der Datenübertragung empfangene Sendeleistung erhöht oder erniedrigt bzw. erhöht oder erniedrigt oder gleich bleibt.

16. Verfahren nach einem der vorangegangen Ansprüche 6, 7 und 10 bis 15, bei dem für die Ermittlung der absoluten Kanalqualitätsinformation (CQI), welche für die Bestimmung des Mittelwertes herangezogen wird, ein anderes Zeitintervall herangezogen wird, als für die im Falle das kein Übergabezustand vorliegt ermittelten absoluten Kanalqualitätsinformation (CQI).

17. Verfahren nach einem der vorangegangenen Ansprüche 4 bis 7, 9 bis 16, bei dem die wiederkehrenden, insbesondere zyklisch wiederkehrenden Zeitpunkte, von einer Basisstation o-der/und einer zentralen Einheit des Kommunikationsnetzes (CN) vorbestimmt sind.

18. Verfahren nach einem der vorangegangen Ansprüche, bei dem das Kommunikationsnetz (CN) ein Mobilfunknetz ist, welches gemäß dem UMTS Standard arbeitet und es sich bei dem Datenübertragungsverfahren um HSDPA handelt.

19. Terminal (E) mit einer Sende/Empfangseinheit zum Übertragen und Empfangen von Daten über eine Funkstrecke und einer Prozessoreinheit, welche zur Durchführung eines Verfahrens gemäß einem der Ansprüche 1 bis 18 eingerichtet ist.

20. Basisstation (S) mit einer Sende/Empfangseinheit zum Übertragen und Empfangen von Daten über eine Funkstrecke, mit einer Verbindung zu einem Kommunikationsnetzwerk und einer Prozessoreinheit, welche zur Durchführung eines Verfahrens gemäß einem der Ansprüche 1 bis 18 eingerichtet ist.

21. Kommunikationsnetz mit einem Terminal(E) nach Anspruch 19 und einer Basisstation (S) nach Anspruch 20.
